# EUROPEAN PATENT SPECIFICATION

(11) **EP 2 930 663 B1**
(45) Date of publication and mention of the grant of the patent: **01.07.2020**
(21) Application number: 14164513.5
(22) Date of filing: 11.04.2014
(51) Int. Cl.: G06K 19/073, G06K 19/07, G06Q 20/34

(54) **Electronic circuit chip for an RFID tag with a read-only-once functionality**
Elektronischer Schaltungschip für ein RFID-Etikett mit Einmallesefunktion
Puce à circuit électronique destinée à une étiquette RFID avec une fonctionnalité de lecture seule

(43) Date of publication of application: 14.10.2015
(73) Proprietor: NXP B.V., 5656 AG Eindhoven (NL)
(72) Inventor: Brands, Jan, 5656 AG Eindhoven (NL); van Roermund, Timotheus, 5656 AG Eindhoven (NL); Polak, Piotr, 5656 AG Eindhoven (NL); Jedema, Friso, 5656 AG Eindhoven (NL); Hoogerbrugge, Jan, 5656 AG Eindhoven (NL)
(74) Representative: Krott, Michel

(56) References cited:
- WO-A2-2007/015204
- US-A1- 2008 109 899
- US-A1- 2009 187 766

## Description

### FIELD OF THE INVENTION

The present disclosure relates to the technical field of electronic tags, in particular RFID tags. Specifically, the present disclosure relates to an electronic circuit chip for an RFID tag, to an RFID tag being provided with such an electronic circuit chip and to a method for managing the use of a secret value stored within a memory device of such an RFID tag.

### BACKGROUND OF THE INVENTION

In many applications of the daily life it is necessary to provide tickets or tags which contain a secret value which can be read out only once (read-only-once secret value). Such tickets are presently used e.g. for lotteries, discount vouchers, gift cards, telephone calling cards etc.

It is known to use so called scratch cards, on which a latex layer has been applied to hide the secret value being printed on the card. In order to make the secret value visible, the layer has to be scratched away using e.g. a finger nail or a small hard object such as a coin. The latex layer functions both to keep the secret value secret and to show that the secret value has not been made visible.

A well-known variation of the scratch card is the so called pull-tab card. These cards are often made of cardboard and contain perforated cover window tabs, behind which a secret value (e.g. a PIN code) is printed. The user must break open the card, or pull up the pull-tabs, to see the secret value printed within. A destroyed card or a destroyed cover of such a card indicates that somebody may have retrieved the secret value.

Both scratch cards and pull-tab cards are tamper sensitive. For an expert it may not be difficult to reapply an appropriate layer on a used scratch card or to rebuild a pull-tab card such that a user will assume that the scratch card respectively the pull-tab card is unused. This means that the user will wrongly be of the opinion that the secret value being stored has not yet been retrieved.

Due to the progress in the technical field of electronic devices it may be desirable to realize the functionality of scratch cards or of pull-tab cards in electronic form in integrated circuits (ICs) in particular for contactless tags. However, known contactless tags ICs contain no trace capability if or whether the data in their memory has been read out, has been altered or has been manipulated.

A straightforward way to protect digital data is to use encryption. However, adding encryption functionality to simple contactless tag ICs is relatively expensive. Furthermore, using cryptography to implement an authentication protocol involves the (secure) distribution of cryptographic keys to the entities which should have access to the data. Document US 2009/0187766 A1 discloses such a system. This makes the use of encryption in this technical field both expensive and inconvenient.

There may be a need for realizing an easy to implement read-only-once functionality for contactless tags.

US 2008/0109899 A1 describes an authentication system which includes a plurality of electronic tags that are each associated with a respective unique identity ID. The tags include a memory with a first memory location for storing a pre-computed challenge and a second memory location for storing a pre-computed response that is associated with the challenge. The first memory location is non-readable from outside the tag. An access circuit only provides the response after having received a challenge that matches the challenge stored in the first memory location. A reader station obtains the identity associated with a tag. It then determines a corresponding challenge and sends the challenge to the tag. It receives a response from the tag and verifies the authenticity of the tag by comparing the received response to a response that corresponds to the challenge.

WO 2007/015204 A2 describes a method of protecting a secret key from being read by a non-secure software application, which comprises a step of recording the secret key as a routine stored in an executable-only memory. The routine comprises: load instructions to load the secret key into a memory readable by a secure and a non-secure software application, if the routine is called by the secure software application, and control instructions to leave only dummy data instead of the secret key in the readable memory if the software application calling the executable-only routine is the non-secure software application.

### OBJECT AND SUMMARY OF THE INVENTION

This need may be met by the subject matter according to the independent claims. Advantageous embodiments of the present invention are described by the dependent claims.

According to a first aspect there is provided an electronic circuit chip for an RFID tag as defined in claim 1.

The described electronic circuit chip is based on the idea that a memory device of an electronic circuit chip of an RFID tag can be configured in such a manner that by deleting a secret value being stored in the memory device immediately after this value has been retrieved by an external RFID apparatus (e.g. an RFID reader) this secret value cannot be accessed a second time by the external RFID apparatus or by any other RFID apparatus.

Making retrievable the secret value can be realized in particular by processing, by the electronic circuit chip, a special retrieval command which has been transmitted from an external RFID apparatus communicating with the RFID tag. Thereby, the external RFID apparatus may be in particular an appropriate RFID reader.

Deleting the secret value may be realized in such a manner that the secret value is irreversibly destroyed. This means that the secret value is not only shifted within the memory device to a known or unknown storage region which is not accessible with a normal external RFID apparatus. By contrast thereto, destroying the secret value may mean that the secret value will no more be existing. As a consequence, there is no chance to retrieve the secrete value for a second time. This holds not only for usual external RFID apparatuses such as RFID readers but also for sophisticated external RFID apparatuses which may be optimized for RFID tamper procedures. Therefore, the read-only-once data security of an RFID tag being provided with the described electronic circuit will be increased.

The access circuit may be configured for coupling the electronic circuit chip with the antenna element in a direct manner or in an indirect manner. An indirect coupling may mean that in between the access circuit and the antenna element there is connected at least one intermediate electronic element of the RFID tag.

With the described electronic circuit chip an RFID tag may be provided with a functionality which allows to inspect in a reliable manner whether the secret value is yet intact and unread (i.e. has not been read or accessed so far) or whether the secret value is no more intact and has been read by an external RFID apparatus. In this way, one can cheaply transport and distribute secret data, while guaranteeing that nobody except the intended external RFID apparatus was been able to access and read the secret value.

With the electronic circuit chip described in this document such a functionality can be accomplished without using encryption and the use of secret keys. This allows to realize single read out RFID tags or read-only-once RFIDs in a simple and, from an economical point of view, in a very attractive manner. This will make the RFID technology attractive for many further applications which rely on RFID tags which are very simply from a technical point of view (i.e. no encryption is used) and which can be realized in a cheap way.

According to an embodiment the electronic circuit further comprises a transceive buffer, which is connected between the memory device and the access circuit. The transceive buffer is configured (a) for receiving the secret value from the memory device, (b) for temporally storing the received secret value, and (c) for forwarding the temporally stored secret value to the access circuit.

Using the described transceive buffer for temporarily storing the secret value when retrieving the secret value from the memory device respectively from the whole RFID tag may allow for destructing the secret value and/or for deleting the secret value from the memory device before the secret value is sent to an external RFID apparatus as a response to an appropriate read command. With this measure it may be ensured that a timing attack on the RFID tag comprising the described electronic circuit chip will not be successful. This may even hold for a timing attack where the RF electromagnetic field being used by an external RFID apparatus for communicating with the RFID tag is dropped such that the electric power is abruptly removed from the (passive) RFID tag immediately after the secret value has been sent. So first the secret value should be copied to the transceive buffer, then it should be destroyed in the memory, and afterwards the transceive buffer content (i.e. the secret value) is sent to the receiving external RFID apparatus.

The transceive buffer may be made from a volatile memory. As a consequence, the secret value will be automatically deleted as soon as the transceive buffer is no more powered.

According to a further embodiment the memory device is a rechargeable memory device which, after the secret value has been deleted, is operable for storing a new secret value.

Put in other words: After the secret value has been deleted a new secret value can be written into the described memory device. This may allow to reuse the RFID tag being provided with the described electronic circuit for a further read-once function. This may mean that a used read-once RFID tag can be restored by an appropriate write procedure wherein the new secret value is fed into the (rechargeable) memory device.

Descriptive speaking, an RFID tag being equipped with the described single read-out out electronic circuit chip may be configured for storing a new secret value in its memory device after the (previous) secret value has been read out respectively has been retrieved. In order to maintain the functionality of the RFID tag also the new secret value can be read out respectively retrieved only once. Thereby, a recycling of used RFID tags is possible.

According to a further embodiment the electronic circuit chip is configured for preventing storing the new secret value as long as the secret value is stored in the memory device. With this feature it can be prevented that the secret value will be (accidently) overwritten by the new secret value.

It is mentioned that the functionality described with this embodiment is from a technical point of view not a big limitation when one wants to change the secret value of the memory device. Specifically, if it is really needed to overwrite an RFID tag being equipped with the described electronic circuit chip, which RFID tag has not been read out yet, is may be possible simply to retrieve first the secret value and then to write the new secret value into the memory device.

Access to such a functionality of the RFID tag could optionally be protected by using *e.g.* a password in order to prevent users from restoring the secret value. When comparing this protection capability with a known (mechanical) scratch card the functionality of the electronic circuit chip described in this document prevents a scratching of a scratch card and putting back the scratch card to its unopened state by renewing the scratch layer.

According to a further embodiment the electronic circuit chip further comprises a write protection circuit which cooperates with the memory device in such a manner that writing a new secret value into the memory device is blocked unless a predefined write enabling command is received by the write protection circuit.

With the described write protection circuit an access to the memory device which is used for writing a new secret value into the memory device can be prevented. Therefore, the security level of the described electronic circuit chip can be increased and an effective measure against tampering attacks can be realized.

The predefined write enabling command may be any command which is suitable for excluding unauthorized entities from accessing the memory device. The predefined write enabling command may comprise a certain key code which is associated or which matches with a certain lock code being stored within the electronic circuit chip.

In order allow a trusted entity to be able to write a new secret value into the memory device it may be necessary that the trusted entity is aware of this key code, e.g. a PIN or password code, and transmits this key code by means of an appropriate write command or write request to the electronic circuit chip and in particular to the write protection circuit and/or to a memory being associated with the write protection circuit. Only when there is a sufficient match between the key code and the lock code writing respectively storing a new secret value into the memory device will become possible.

According to a further embodiment the electronic circuit chip further comprises a read protection circuit which cooperates with the memory device in such a manner that retrieving the secret value from the memory device is blocked unless a predefined read enabling command is received by the read protection circuit.

The predefined read enabling command may be any command which is suitable for excluding unauthorized entities from retrieving the secret value. In accordance with the predefined write enabling command also the predefined read enabling command may comprise a certain key code which is associated or which matches with a certain lock code being stored within the electronic circuit chip.

In order to be able to retrieve the secret value it may be necessary that an authorized external entity such as a RFID reader is aware of this key code, e.g. a PIN or password code, and transmits this key code by means of an appropriate retrieval command or retrieval request to the electronic circuit chip and in particular to the read protection circuit and/or to a memory being associated with the read protection circuit. Only when there is a sufficient match between the key code and the lock code a read-only-once retrieval of the secret value may be possible.

It is pointed out that the above described write protection circuit and the read protection circuit could be realized with two separate electronic protection circuits or with a common electronic protection circuit.

The described key code procedure could be combined with a functionality such as the password check as described in US 2008/0109899 A1. Before the secret value can be read, first a password needs to be sent. The secret value is returned as a response to the correct password being submitted. The secret value is destroyed when the proper password is submitted. In case of a wrong password, an error code is returned and the secret value remains untouched.

According to a further embodiment the protection circuit is configured for initiating a deleting of the secret value stored in the memory device if the number of times a tampering enabling command has been received exceeds a predefined threshold number.

Descriptively speaking, the protection circuit can be used to prompt a destruction of the secret value if the number of times a wrong password is submitted for making the secret value retrievably exceeds a certain predetermined limit. Depending on the specific application the predefined threshold number may be freely selected.

According to a further embodiment the electronic circuit chip further comprises a processing circuit which is communicatively coupled with the memory device and/or the access circuit. The processing circuit is configured (a) for receiving a preparatory retrieval command from an external RFID apparatus, (b) for issuing a check command to the external RFID apparatus, which check command indicates a readiness for getting retrieved the secret value, (c) for receiving a retrieval command from the external RFID apparatus, and (d) for making the secret value retrievable.

With the provision of the described processing circuit an accidental read-out (and thereby an accidental destruction of the stored secret value) can be effectively prevented. Thereby, issuing the preparatory retrieval command may be mandatory before allowing a receiving and/or a processing of the retrieval command.

Again, within the electronic circuit chip a direct or alternatively an indirect coupling between (a) the processing circuit and (b) the memory device and/or the access circuit may be possible.

According to a further embodiment the memory device is further configured (a) for storing a further secret value, and the electronic circuit chip is further configured for (b) for retrieving the further secret value from the memory device, and (c) for deleting the further secret value from the memory device, wherein deleting the further secret value is accomplished if the further secret value has been retrieved by means of a further first attempt procedure for retrieving the further stored secret value.

Descriptively speaking, the memory device described in this embodiment is not only capable of storing one secret value but is capable of storing (at least) two secret values, wherein all secret values exhibit a read-only-once functionality. Therefore, the described electronic circuit chip can be used for applications where from one single RFID tag a plurality of secret values can each be retrieved only once.

For storing more than one secret value the memory device may comprise more than one memory register. Thereby, for each secret value there may be used one (dedicated) memory register.

According to a further embodiment the access circuit is further configured for coupling the electronic circuit chip to a power circuit and/or to a communication circuit of the RFID tag.

In this respect the term "power circuit" may refer to any electronic circuitry which is capable of supplying (electric) power at least to the electronic circuit chip of the RFID tag. The "power circuit" may be configured for retrieving electric energy from an RF electromagnetic field being provided by an RFID reader apparatus and for providing the retrieved electric energy at least to the electronic circuit chip whose operational capability relies on the provided electric energy. However, in case of an active RFID tag the "power circuit" may use electric energy being stored in an electric energy storage within the RFID tag in order to provide in particular the electronic circuit chip with the necessary power being used for an appropriate operation.

The term "communication circuit" may refer to any electronic circuitry which is configured for controlling the RF communication of the RFID tag with an RFID device such as an RFID reader. In the technical field of RFID tags such communication circuits are widely known by persons skilled in the art. Therefore, for the sake of conciseness, a more detailed explanation of such circuits will be omitted in this document.

As has already been mentioned above with respect to the antenna element also the power circuit and/or the communication circuit may be connectable directly or indirectly with the access circuit.

According to a further aspect an RFID tag is provided. The provided RFID tag comprises (a) the electronic circuit chip as described above, and (b) an antenna element being connected to the access circuit via the communication circuit.

The described RFID tag is based on the idea that with the above elucidated electronic circuit chip the RFID tag can be provided with an easy to realize functionality which allows to prevent that the secret value stored in the memory device of the electronic circuit chip is retrieved not only once but at least a second time.

According to an embodiment the RFID chip further comprises a casing enclosing at least the antenna element.

Packaging at least the antenna element within a casing may allow for mechanically protecting the antenna element which is a component of an RFID tag, which is probably most susceptible for mechanical stress. As a consequence, the mechanical stability of the whole RFID tag can be increased.

The casing may be any type of materialized surrounding which can be used for enclosing at least the antenna element. The casing may also be referred to as an envelope or a container.

The casing may be formed in such a manner that the whole RFID tag is enveloped or covered. As a consequence, the mechanic stability of the whole RFID tag will be increased.

According to a further embodiment the casing comprises a material which blocks at least partially electromagnetic radiation being used for Near Field Communication.

By packaging the RFID tag in the casing an accidental read out of the secret value by an (authorized) external RFID device and/or a tampering read out of the secret value by an (unauthorized) entity can be prevented. An effective and simple realization of a shield against Near Field Communication (NFC) radiation can be realized by forming the casing from a metallic foil.

In this respect it is mentioned that it may be beneficial to design the casing and/or to select the material for blocking the NFC radiation in such a manner that radiation used for command signals and for retrieve signals being used for allowably retrieving the secret value is attenuated as little as possible. Thereby, the RFID communication with an (authorized) external RFID device will not or will only a little bit be affected by the casing. This may be realized for designing the RFID tag in such a manner that the frequency range of the radiation being used for operating the RFID tag in an authorized manner is different from the frequency range of radiation being used for (standard) NFC communication.

According to a further aspect there is provided a method for managing the use of a read-only-once secret value by an RFID tag as defined in claim 14.

Also the described method is based on the idea that the RFID tag can be configured is such a manner that by deleting and in particular by destroying the secret value being stored in the memory device of the electronic circuit chip immediately after this value has been retrieved by an external RFID apparatus (e.g. an RFID reader) this secret value cannot be accessed any more by the external RFID apparatus or by any other RFID apparatus.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination between features relating to different subject matters, in particular between features of the method type claims and features of the apparatus type claims, is considered as to be disclosed with this application.

The aspects defined above and further aspects of embodiments of the present invention are apparent from the examples of embodiment to be described hereinafter and are explained with reference to the examples of embodiment. Embodiments of the invention will be described in more detail hereinafter with reference to examples of embodiment but to which the invention is not limited.

### BRIEF DESCRIPTION OF THE DRAWINGS

Figure 1 shows a block diagram of an RFID tag comprising an electronic circuit chip with a memory device having a read-only-once functionality,
Figure 2 shows a flow chart of a method for managing the use of a read-only-once secret value by an RFID tag.

### DESCRIPTION OF EMBODIMENTS

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

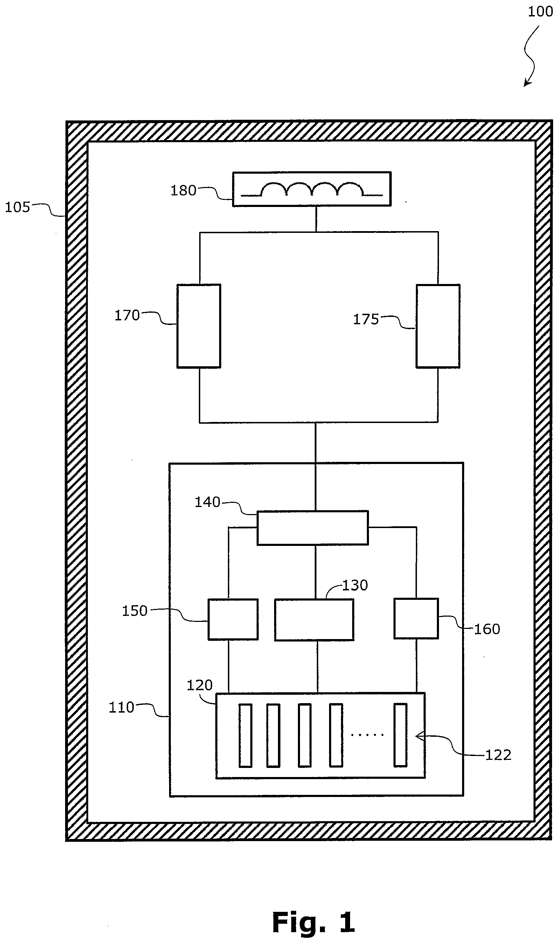

Figure 1 shows a block diagram of an RFID tag 100 comprising an electronic circuit chip 110 with a memory device having a read-only-once functionality. The RFID tag 100 comprises an electronic circuit chip 110 having a memory device 120 and an access circuit 140 which is used for connecting the memory device 120 with components of the RFID tag 100 which components are not implemented in the electronic circuit chip 110.

As can be seen from Figure 1, the memory device 120 comprises several memory registers 122. According to the exemplary embodiment described here, each memory register 122 can be used for storing one secret value which, as will be elucidated in detail below, can only be retrieved one time from the memory device 120. In accordance with the basic principles of the RFID tag 100, a double or even a multiple retrieval of one and the same secret value is not possible because upon a retrieval of a secret value from the memory device 120 this secret value is deleted.

As can be further seen from Figure 1, the electronic circuit chip 110 comprises a transceive buffer 130 which is interconnected between the memory device 120 and the access circuit 140. The transceive buffer 130 is able to recognize a secret value retrieval request which originates from a not depicted external RFID apparatus such as an RFID reader. In response to such a request the secret value is transferred from the memory device 120 to the transceive buffer130. In the transceive buffer 130 the secret value is temporarily stored. During the storage of the secret value in the transceive buffer 130 the secret value being stored in the memory device 120 is deleted or destroyed. As soon as the transceive buffer 130 recognizes or is informed about the deletion or the destruction of the secret value in the memory device 120, the transceive buffer 130 is ready for forwarding the temporally stored secret value to the access circuit 140.

From the access circuit 140 the secret value may be forwarded by further components of the RFID tag 100 to the external RFID apparatus which has started the whole read-only-once retrieval procedure with the above mentioned secret value retrieval request. With the help of the transceive buffer 130 it can be ensured that it will not be possible to retrieve the secret value with tampering the RFID by means of a timing attack where an RF electromagnetic field is abruptly dropped such that the electric power is removed from the (passive) RFID tag immediately after the secret value has been sent. A multiple read out of the secret value from the memory device 120 can be effectively prevented by allowing a forwarding of the secret value from the transceive buffer 140 to the external RFID apparatus only if after copying the secret value into the transceive buffer 140 the secret value within the memory device 120 has already been destroyed.

The electronic circuit chip 110 further comprises a processing circuit 150 which is communicatively coupled with the memory device 120 and with the access circuit 140. In response to receiving a preparatory retrieval command from an external RFID apparatus the processing circuit 150 can issue a check command to the external RFID apparatus, which check command indicates to the external RFID apparatus that the electronic circuit chip 110 is ready for getting retrieved the secret value. In response to receiving a subsequent retrieval command from the external RFID apparatus the secret value can be retrieved. With this procedure an accidental read-out (and thereby an accidental destruction of the stored secret value) can be effectively prevented. According to the exemplary embodiment described here issuing the check command is mandatory before allowing a receiving and/or a processing of the retrieval command.

The electronic circuit chip 110 further comprises a protection circuit 160 which is capable of cooperating with the memory device 120 in such a manner that retrieving the secret value is blocked unless a predefined enabling command is received by the protection circuit 160. The predefined enabling command may be associated with a password or a PIN which has to match with a password respectively with a PIN being stored within the electronic circuit chip 110 and in particular within the memory device 120. With this procedure unauthorized entities can be effectively excluded from retrieving the secret value.

It is pointed out that the protection circuit 160 can also have a write protection functionality. This functionality may be realized with an appropriate write protection subcircuit. The write protection functionality can be used to limit an access to the electronic circuit chip 110 and in particular to the memory device 120 such that only authorized entities will be able to write a new secret value into the memory device.

As can be seen from Figure 1, the RFID tag 100 further comprises a power circuit 170, a communication circuit 175, and an antenna element 180. In a known manner the power circuit 170 is used for harvesting power from an RF electromagnetic field being generated by an external RFID apparatus being or trying to get in communication with the RFID tag 100. The communication circuit 175 is used for controlling the RF communication via the air interface extending between the external RFID apparatus and the RFID tag 100. The antenna element 180 is used in a known manner for picking up RF signals from the external RFID apparatus and for transmitting RF signals comprising pieces of RFID information to the external RFID apparatus.

According to the exemplary embodiment described here a casing 105 is used for shielding the RFID tag 100 against Near Field Communication (NFC) radiation. With this measure tampering attacks carried out with unauthorized NFC capable devices such as smart phones can be repelled. In a simple embodiment the casing 105 is made from a metallic foil.

It is pointed out that the described circuitry of the RFID tag 100 is only exemplary in order to visualize possible means providing the read-only-once functionality. In reality, the functionality of certain blocks can be combined within one component. Further, the interconnections in between the several blocks can also be realized in a different way without causing disadvantages in the operability of the described read-only-once RFID tag 100. Since the person skilled in the art will be able to realize the read-only-once functionality of the RFID tag 100 with a different logical composition or structure of the various blocks, for the sake of conciseness further structural block arrangements and interconnections will not be described.

In the following commands implemented in the RFID tag 100 (a) for enabling an initialization, (b) for initializing, (c) for protecting, (d) for enabling a retrieval, and (e) for retrieving the secret value will be elucidated:
(a) Enable initializing: A write enabling command is received to the electronic circuit chip. This write enabling command comprises a certain write key code which has to be checked by the electronic circuit chip. Only if this write key code matches with a predefined write lock code being stored within the electronic circuit chip, writing a secret value into the memory device will be possible. Otherwise there will no access be allowed to the electronic circuit chip.
(b) Initializing: A write command stores a secret value in the memory device, which secret value can only be read out using a subsequent read command. The write command can have a parameter indicating the desired memory register into which the secret value is supposed to be stored.
(c) Protecting: A check command checks whether the secret value has already been retrieved. The check command returns a value TRUE or FALSE (e.g. 0 or 1). Also the check command can have a parameter indicating the memory register into which the desired secret value has been written.
(d) Enable retrieving: A read enabling command is received to the electronic circuit chip. This read enabling command comprises a certain read key code which has to be checked by the electronic circuit chip. Only if this read key code matches with a predefined read lock code being stored within the electronic circuit chip, retrieving the secret value from the memory device will be possible. Otherwise there will no access be allowed to the electronic circuit chip.
(e) Retrieving: A read command returns the stored secret value and causes a destruction of the secret value stored in memory device. Also the read command can have a parameter indicating the desired memory register. The read command can only be executed once (per memory register) and will return an error code (e.g. a NACK value) on a second or any subsequent try for retrieving the secret value.

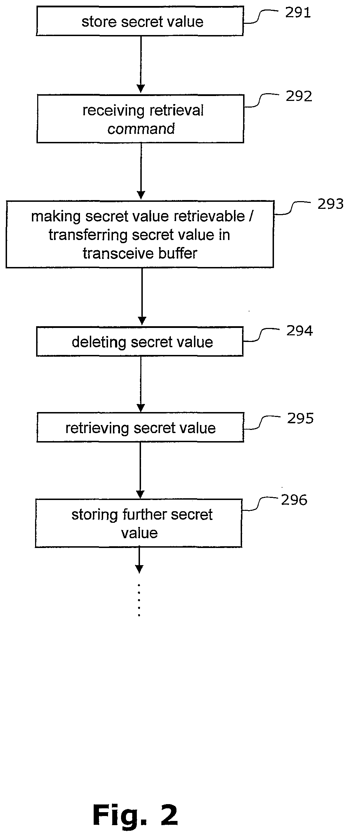

Figure 2 shows a flow chart of a method for managing the use of a read-only-once secret value by an RFID tag 100. In step 291 a certain secret value is stored in the memory device 120 by means of the above mentioned write command. Storing the certain secret value into the memory device 120 may require a submission of a password or a PIN first. By this submission a corresponding entity can identify itself as an authorized entity.

In step 292 the RFID tag 100 receives a retrieval command which has been transmitted from an external RFID apparatus communicating with the RFID tag 100. This retrieval command may be the above mentioned check command. It is mentioned that also the retrieval command may be associated with the submission of a password or PIN. Only if this submission is successful, i.e. the respective entity has been identified as an authorized entity, the retrieval command will be processed.

In step 293 the RFID tag 100 makes the secret value retrievable. According to the exemplary embodiment described here this comprises transferring or copying the secret value from the memory device 120 into the transceive buffer 130.

In step 294 the secret value, which is still stored in the memory device, is deleted. Thereby, the secret value is destroyed such that a recovery of the secret value is no more possible.

In step 295 the secret value is retrieved. Thereby, the secret value is transferred via RFID communication from the RFID tag 100 to an external RFID apparatus such as an RFID reader.

In step 296 a further secret value is stored in the memory device 120 by means of a further write command. Thereby, the used RFID tag 100 is reused and, in accordance with the secret value, also the further secret value can be subjected to a further read-only-once retrieval procedure. This further read-only-once retrieval procedure uses further steps, which correspond to the steps 292 to 295 and which are indicated in Figure 2 by the vertically arranged dots.

In the following some possible applications for the described RFID tag will be presented. It is noted that the corresponding enumeration is not complete and the described RFID tag can be used for a plurality of other applications.
1. Gift card: Thereby, the RFID tag may store a unique code representing a certain monetary value.
2. Discount voucher: Thereby, the RFID tag may store a unique discount code.
3. Prepaid payment card or telephone calling card: Thereby, the RFID tag may store money in multiple small increments (preferably with cryptographic checksums), wherein each only small increment is readable only once. To spend (a part of) the money, as many increments as required for the total amount are read out from the RFID tag.
4. Prepaid electric meter card: Thereby, the RFID tag may store a unique code or a similar setup as described for the prepaid payment card.
5. Lottery ticket or pull-tab card (gambling ticket): Thereby, the RFID tag may store multiple secret values, wherein each can only be read out once. The user (e.g. using an app on an NFC-enabled mobile device) is allowed to open and read a subset of these secret values to see whether a winning combination can be created.
6. Physical transport medium for secret key data to enable establishing encrypted communication at a later point in time.
7. Bitcoin implemented as physical item: Thereby, the bitcoins may be represented by a socalled address key and a (secret) private key. The address key is public. The private key is needed to spend a bitcoin online. As long as the private key is secret and is stored inside an RFID tag, this RFID tag can essentially be used as a physical representation of a bitcoin.

It is mentioned that the described RFID tag can be combined with the use of an NFC-enabled mobile device running some specific app as the external read-out apparatus. The app could automatically be started on touching the RFID tag e.g. by using a NFC Data Exchange Format (NDEF) message which is stored in an openly-readable part of the memory device of the RFID tag. The app can ask the user whether s/he really wants to open the RFID tag and read out the secret value. The secret value can automatically be checked on-line by the app, e.g. to redeem a gift certificate, a discount code, or a prize that is won. However, also other options are possible for example in combination with the above mentioned telephone calling card. Also a prepaid home energy (electricity) meter equipped with a contactless RFID reader apparatus can very easily check the authenticity of the respective card.

The embodiments described in this document can be descriptively summarized as follows: Simple contactless tickets or RFID tags, such as those used e.g. in public transport systems, usually do not contain complicated cryptographic functionality in order to implement an access control. By adding some relatively simple functionality in the form of a couple of new commands, a "read-only-once" memory functionality can be implemented in an integrated electronic circuit of a contactless ticket respectively an RFID tag. This allows for a use of such integrated electronic circuits in completely new application areas and gives improved security in existing contactless tickets respectively RFID tags.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### Reference Numerals:

- 100: RFID tag
- 105: casing
- 110: electronic circuit chip
- 120: memory device
- 122: memory register
- 130: transceive buffer
- 140: access circuit
- 150: processing circuit
- 160: protection circuit
- 170: power circuit
- 175: communication circuit
- 180: antenna element

- 291: step 1
- 292: step 2
- 293: step 3
- 294: step 4
- 295: step 5
- 296: step 6

## Claims

1. An electronic circuit chip (110) for an RFID tag (100), the electronic circuit chip (110) comprising
an access circuit (140) configured for coupling the electronic circuit chip (110) to an antenna element (180) of the RFID tag (100),
a memory device (120) being connected to the access circuit (140), and
a transceive buffer (130), which is connected between the memory device (120) and the access circuit (140), wherein
the memory device (120) is configured for storing a secret value,
the transceive buffer (130) is configured for receiving the secret value from the memory device (120), temporally storing the received secret value, and forwarding the temporally stored secret value to the access circuit (140), and
the electronic circuit chip (110) is configured for making retrievable the secret value from the memory device (120) and deleting the secret value from the memory device (120), wherein deleting the secret value is accomplished if the secret value has been retrieved by means of a procedure for retrieving the stored secret value.

2. The electronic circuit chip (110) as set forth in any one of the preceding claims, wherein the memory device (120) is a rechargeable memory device (120) which, after the secret value has been deleted, is operable for storing a new secret value.

3. The electronic circuit chip (110) as set forth in the preceding claim, wherein
the electronic circuit chip (110) is configured for
preventing storing the new secret value as long as the secret value is stored in the memory device (120).

4. The electronic circuit chip (110) as set forth in any one of the preceding claims 2 and 3, further comprising
a write protection circuit (160) which cooperates with the memory device (120) in such a manner that writing a new secret value into the memory device (120) is blocked unless a predefined write enabling command is received by the write protection circuit (160).

5. The electronic circuit chip (110) as set forth in any one of the preceding claims, further comprising
a read protection circuit (160) which cooperates with the memory device (120) in such a manner that retrieving the secret value from the memory device (120) is blocked unless a predefined read enabling command is received by the read protection circuit (160).

6. The electronic circuit chip (110) as set forth in the preceding claim, wherein
the protection circuit (160) is configured for initiating a deleting of the secret value stored in the memory device (120) if the number of times a tampering enabling command has been received exceeds a predefined threshold number.

7. The electronic circuit chip (110) as set forth in any one of the preceding claims, further comprising
a processing circuit (150) which is communicatively coupled with the memory device (120) and/or the access circuit (140), wherein the processing circuit (150) is configured for
receiving a preparatory retrieval command from an external RFID apparatus,
issuing a check command to the external RFID apparatus, which check command indicates a readiness for getting retrieved the secret value,
receiving a retrieval command from the external RFID apparatus, and
making the secret value retrievable.

8. The electronic circuit chip (110) as set forth in any one of the preceding claims, wherein the memory device (120) is further configured for
(a) storing a further secret value, and
the electronic circuit chip (110) is configured for
(b) making retrievable the further secret value from the memory device (120), and
(c) deleting the further secret value from the memory device (120), wherein deleting the further secret value is accomplished if the further secret value has been retrieved by means of a further procedure for retrieving the further stored secret value.

9. The electronic circuit chip (110) as set forth in the preceding claim, wherein
the access circuit (140) is further configured for coupling the electronic circuit chip (110) to a power circuit (170) and/or to a communication circuit (175) of the RFID tag (100).

10. An RFID tag (100) comprising
the electronic circuit chip (110) as set forth in any one of the preceding claims, and
an antenna element (180) being connected to the access circuit (140) via a communication circuit (175).

11. The RFID tag (100) as set forth in the preceding claim, further comprising
a casing enclosing at least the antenna element (180).

12. The RFID tag (100) as set forth in the preceding claim, wherein
the casing comprises a material which blocks at least partially electromagnetic radiation being used for Near Field Communication.

13. A method for managing the use of a read-only-once secret value by an RFID tag (100), the method comprising
storing a secret value in a memory device (120) of an electronic circuit chip (110) as set forth in any one of the preceding claims 1 to 9,
receiving a retrieval command which has been transmitted from an external RFID apparatus communicating with the RFID tag (100),
making retrievable the secret value from the memory device (120),
receiving the secret value from the memory device (120) by a transceiver buffer (130),
temporally storing the received secret value in the transceiver buffer (130),
forwarding the temporally stored secret value from the transceiver buffer (130) to the access circuit (140), and
deleting the secret value from the memory device (120) if the secret value has been retrieved by means of a procedure for retrieving the stored secret value.

## Patentansprüche

1. Elektronischer Schaltungschip (110) für ein RFID-Tag (100), wobei der elektronische Schaltungschip (110) Folgendes umfasst:
eine Zugriffsschaltung (140), die dafür ausgelegt ist, den elektronischen Schaltungschip (110) mit einem Antennenelement (180) des RFID-Tags (100) zu koppeln,
eine Speichervorrichtung (120), die mit der Zugriffsschaltung (140) verbunden ist, und
einen Sende-Empfangs-Puffer (130), der zwischen die Speichervorrichtung (120) und die Zugriffsschaltung (140) geschaltet ist, wobei
die Speichervorrichtung (120) dafür ausgelegt ist, einen geheimen Werte zu speichern,
der Sende-Empfangs-Puffer (130) dafür ausgelegt ist, den geheimen Wert von der Speichervorrichtung (120) zu empfangen, den empfangenen geheimen Wert vorübergehend zu speichern und den vorübergehend gespeicherten geheimen Wert an die Zugriffsschaltung (140) weiterzuleiten, und der elektronische Schaltungschip (110) dafür ausgelegt ist, den geheimen Wert aus der Speichervorrichtung (120) abrufbar zu machen und den geheimen Wert von der Speichervorrichtung (120) zu löschen, wobei das Löschen des geheimen Werts durchgeführt wird, wenn der geheime Wert mittels eines Verfahrens zum Abrufen des gespeicherten geheimen Werts abgerufen wurde.

2. Elektronischer Schaltungschip (110) nach einem der vorhergehenden Ansprüche, wobei
die Speichervorrichtung (120) eine wiederverwendbare Speichervorrichtung (120) ist, die nach dem Löschen des geheimen Werts zum Speichern eines neuen geheimen Werts betreibbar ist.

3. Elektronischer Schaltungschip (110) nach dem vorhergehenden Anspruch, wobei
der elektronische Schaltungschip (110) dafür ausgelegt ist, das Speichern des neuen geheimen Werts zu verhindern, solange der geheime Wert in der Speichervorrichtung (120) gespeichert ist.

4. Elektronischer Schaltungschip (110) nach einem der vorhergehenden Ansprüche 2 und 3, ferner umfassend:
eine Schreibschutzschaltung (160), die mit der Speichervorrichtung (120) derart zusammenwirkt, dass das Schreiben eines neuen geheimen Werts in die Speichervorrichtung (120) blockiert wird, es sei denn, ein vordefinierter Schreibfreigabebefehl wird von der Schreibschutzschaltung (160) empfangen.

5. Elektronischer Schaltungschip (110) nach einem der vorhergehenden Ansprüche, ferner umfassend:
eine Leseschutzschaltung (160), die mit der Speichervorrichtung (120) derart zusammenwirkt, dass das Abrufen des geheimen Werts aus der Speichervorrichtung (120) blockiert wird, es sei denn, ein vordefinierter Lesefreigabebefehl wird von der Leseschutzschaltung (160) empfangen.

6. Elektronischer Schaltungschip (110) nach dem vorhergehenden Anspruch, wobei
die Schutzschaltung (160) dafür ausgelegt ist, eine Löschung des in der Speichervorrichtung (120) gespeicherten geheimen Werts einzuleiten, wenn die Anzahl von Malen, die ein Manipulationsfreigabebefehl empfangen wurde, eine vordefinierte Schwellenanzahl überschreitet.

7. Elektronischer Schaltungschip (110) nach einem der vorhergehenden Ansprüche, ferner umfassend:
eine Verarbeitungsschaltung (150), die mit der Speichervorrichtung (120) und/oder der Zugriffsschaltung (140) kommunikativ gekoppelt ist, wobei die Verarbeitungsschaltung (150) für Folgendes ausgelegt ist:
Empfangen eines vorbereitenden Abrufbefehls von einer externen RFID-Vorrichtung,
Ausgeben eines Prüfbefehls an die externe RFID-Vorrichtung, wobei der Prüfbefehl die Bereitschaft zum Abrufen des geheimen Werts anzeigt,
Empfangen eines Abrufbefehls von der externen RFID-Vorrichtung, und
Ermöglichen des Abrufens des geheimen Werts.

8. Elektronischer Schaltungschip (110) nach einem der vorhergehenden Ansprüche, wobei
die Speichervorrichtung (120) ferner für Folgendes ausgelegt ist:
(a) Speichern eines weiteren geheimen Werts, und
der elektronische Schaltungschip (110) für Folgendes ausgelegt ist:
(b) Ermöglichen des Abrufens des weiteren geheimen Werts aus der Speichervorrichtung (120), und
(c) Löschen des weiteren geheimen Werts aus der Speichervorrichtung (120), wobei das Löschen des weiteren geheimen Werts erfolgt, wenn der weitere geheime Wert mittels eines weiteren Verfahrens zum Abrufen des weiteren gespeicherten geheimen Werts abgerufen wurde.

9. Elektronischer Schaltungschip (110) nach dem vorhergehenden Anspruch, wobei
die Zugriffsschaltung (140) ferner dafür ausgelegt ist, den elektronischen Schaltungschip (110) mit einer Stromversorgungsschaltung (170) und/oder mit einer Kommunikationsschaltung (175) des RFID-Tags (100) zu koppeln.

10. RFID-Tag (100), umfassend:
den elektronischen Schaltungschip (110) nach einem der vorhergehenden Ansprüche, und
ein Antennenelement (180), das über eine Kommunikationsschaltung (175) mit der Zugriffsschaltung (140) verbunden ist.

11. RFID-Tag (100) nach dem vorhergehenden Anspruch, ferner umfassend
ein Gehäuse, das zumindest das Antennenelement (180) umschließt.

12. RFID-Tag (100) nach dem vorhergehenden Anspruch, wobei
das Gehäuse ein Material umfasst, das zumindest teilweise elektromagnetische Strahlung blockiert, die für Nahfeldkommunikation (engl. Near Field Communication) verwendet wird.

13. Verfahren zum Verwalten der Verwendung eines geheimen Einmalig-Lesen-Werts durch ein RFID-Tag (100), wobei das Verfahren Folgendes umfasst:
Speichern eines geheimen Werts in einer Speichervorrichtung (120) eines elektronischen Schaltungschips (110) nach einem der vorhergehenden Ansprüche 1 bis 9,
Empfangen eines Abrufbefehls, der von einer externen RFID-Vorrichtung übertragen wurde, die mit dem RFID-Tag kommuniziert (100),
Ermöglichen des Abrufens des geheimen Werts aus der Speichervorrichtung (120),
Empfangen des geheimen Werts von der Speichervorrichtung (120) durch einen Sende-Empfangs-Puffer (130), vorübergehendes Speichern des empfangenen geheimen Werts im Sende-Empfangs-Puffer (130),
Weiterleiten des vorübergehend gespeicherten geheimen Werts vom Sende-Empfangs-Puffer (130) an die Zugriffsschaltung (140), und
Löschen des geheimen Werts aus der Speichervorrichtung (120), wenn der geheime Wert mittels eines Verfahrens zum Abrufen des gespeicherten geheimen Werts abgerufen wurde.

## Revendications

1. Puce à circuit électronique (110) pour une étiquette RFID (100), cette puce à circuit électronique (110) comprenant :
un circuit d'accès (140) configuré de façon à coupler la puce à circuit électronique (110) à un élément d'antenne (180) de l'étiquette RFID (100),
un dispositif de mémoire (120) étant connecté au circuit d'accès (140), et
une mémoire tampon d'émission-réception (130), qui est connectée entre le dispositif de mémoire (120) et le circuit d'accès (140),
le dispositif de mémoire (120) étant configuré de façon à stocker une valeur secrète,
la mémoire tampon d'émission-réception (130) étant configurée de façon à recevoir cette valeur secrète depuis le dispositif de mémoire (120), à stocker temporellement cette valeur secrète reçue, et à réacheminer cette valeur secrète stockée temporellement au circuit d'accès (140), et
cette puce à circuit électronique (110) étant configurée de façon à rendre récupérable la valeur secrète depuis le dispositif de mémoire (120) et à supprimer la valeur secrète du dispositif de mémoire (120), la suppression de la valeur secrète étant accomplie si la valeur secrète a été récupérée au moyen d'une procédure pour récupérer la valeur secrète stockée.

2. Puce à circuit électronique (110) selon l'une quelconque des revendications précédentes, dans lequel le dispositif de mémoire (120) est un dispositif de mémoire rechargeable (120) qui, après que la valeur secrète a été supprimée, peut être utilisé pour stocker une nouvelle valeur secrète.

3. Puce à circuit électronique (110) selon l'une quelconque des revendications précédentes, cette puce à circuit électronique (110) étant configurée de façon à empêcher le stockage de la nouvelle valeur secrète aussi longtemps que la valeur secrète est stockée dans le dispositif de mémoire (120).

4. Puce à circuit électronique (110) selon l'une quelconque des revendications 2 et 3, comprenant en outre :
un circuit de protection d'écriture (160) qui coopère avec le dispositif de mémoire (120) de manière à ce que l'écriture d'une nouvelle valeur secrète dans le dispositif de mémoire (120) soit bloquée à moins qu'une commande de permission d'écriture prédéfinie ne soit reçue par le circuit de protection d'écriture (160) .

5. Puce à circuit électronique (110) selon l'une quelconque des revendications précédentes, comprenant en outre :
un circuit de protection de lecture (160) qui coopère avec le dispositif de mémoire (120) de manière à ce que la récupération de la valeur secrète depuis le dispositif de mémoire (120) soit bloquée à moins qu'une commande de permission de lecture prédéfinie ne soit reçue par le circuit de protection de lecture (160).

6. Puce à circuit électronique (110) selon l'une quelconque des revendications précédentes, dans lequel le circuit de protection (160) est configuré de façon à lancer une suppression de la valeur secrète stockée dans le dispositif de mémoire (120) si le nombre de fois qu'une commande de permission d'altération a été reçue dépasse un nombre seuil prédéfini.

7. Puce à circuit électronique (110) selon l'une quelconque des revendications précédentes, comprenant en outre :
un circuit de traitement (150) qui est couplé de manière communicative avec le dispositif de mémoire (120) et/ou le circuit d'accès (140), ce circuit de traitement (150) étant configuré de façon à
recevoir une commande de récupération préparatoire venant d'un appareil RFID externe,
émettre une commande de contrôle destinée à l'appareil RFID externe, laquelle commande de contrôle indique un état prêt pour faire en sorte que la valeur secrète soit récupérée,
recevoir une commande de récupération venant de l'appareil RFID externe, et à
rendre la valeur secrète récupérable.

8. Puce à circuit électronique (110) selon l'une quelconque des revendications précédentes, dans laquelle le dispositif de mémoire (120) est configuré en outre de façon à
(a) stocker une autre valeur secrète, et dans laquelle la puce à circuit électronique (110) est configurée de façon à
(b) rendre récupérable cette autre valeur secrète depuis le dispositif de mémoire (120), et à
(c) supprimer cette autre valeur secrète du dispositif de mémoire (120), la suppression de cette autre valeur secrète étant accomplie si cette autre valeur secrète a été récupérée au moyen d'une nouvelle procédure pour récupérer cette autre valeur secrète stockée.

9. Puce à circuit électronique (110) selon l'une quelconque des revendications précédentes, dans laquelle le circuit d'accès (140) est configuré en outre de façon à coupler la puce à circuit électronique (110) à un circuit d'alimentation (170) et/ou à un circuit de communication (175) de l'étiquette RFID (100) .

10. Étiquette RFID (100) comprenant :
la puce à circuit électronique (110) selon l'une quelconque des revendications précédentes, et
un élément d'antenne (180) étant connecté au circuit d'accès (140) via un circuit de communication (175) .

11. Étiquette RFID (100) selon l'une quelconque des revendications précédentes, comprenant en outre :
un boîtier renfermant au moins l'élément d'antenne (180) .

12. Étiquette RFID (100) selon l'une quelconque des revendications précédentes, dans laquelle le boîtier consiste en un matériau qui bloque au moins partiellement le rayonnement électromagnétique utilisé pour une communication en champ proche.

13. Procédé pour gérer l'utilisation d'une valeur secrète lue une seule fois au moyen d'une étiquette RFID (100), ce procédé comprenant :
le stockage d'une valeur secrète dans un dispositif de mémoire (120) d'une puce à circuit électronique (110) selon l'une quelconque des revendications 1 à 9,
la réception d'une commande de récupération qui a été transmise depuis un appareil RFID externe communiquant avec l'étiquette RFID (100),
le fait de rendre la valeur secrète récupérable depuis le dispositif de mémoire (120),
la réception de la valeur secrète venant du dispositif de mémoire (120) au moyen d'une mémoire tampon d'émission-réception (130),
le stockage temporel de la valeur secrète reçue dans la mémoire tampon d'émission-réception (130),
le réacheminement de la valeur secrète stockée temporellement de la mémoire tampon d'émission-réception (130) au circuit d'accès (140), et
la suppression de la valeur secrète du dispositif de mémoire (120) si la valeur secrète a été récupérée au moyen d'une procédure pour récupérer la valeur secrète stockée.
